# FASCICULE DE BREVET EUROPEEN

(11) **EP 3 297 966 B1**
(45) Date de publication et mention de la délivrance du brevet: **25.11.2020**
(21) Numéro de dépôt: 16729961.9
(22) Date de dépôt: 19.05.2016
(51) Int. Cl.: C03C 3/12, C03C 29/00, C03C 8/24

(54) **COMPOSITION DE VERRE POUR LE SCELLEMENT DE CONNECTEUR MICRO-D**
GLASZUSAMMENSETZUNG FÜR MIKRO-D-VERBINDERABDICHTUNG
GLASS COMPOSITION FOR MICRO-D CONNECTOR SEALING

(30) Priorité: 22.05.2015 FR 1554634
(43) Date de publication de la demande: 28.03.2018
(73) Titulaire: AXON'CABLE, 51210 Montmirail (FR)
(72) Inventeur: DE DEKEN, Leen, 51210 Montmirail (FR); YU, Ning, 77174 Villeneuve Le Comte (FR); PRZYBILLA, Christian, 51210 Montmirail (FR)
(74) Mandataire: Cabinet Beau de Loménie
(86) Numéro de dépôt international: PCT/FR2016/051177
(87) Numéro de publication internationale: WO 2016/189225

(56) Documents cités:
- WO-A1-2008/050819
- WO-A1-2010/126097
- JP-A- H07 330 372
- JP-A- 2005 281 023
- US-A- 3 423 326
- US-A- 4 652 536
- US-A1- 2009 018 006
- US-A1- 2014 153 165
- US-B1- 6 413 891
- BURGER H ET AL: "Glass formation, properties and structure of glasses in the TeO"2@?ZnO system", JOURNAL OF NON-CRYSTALLINE SOLIDS, NORTH-HOLLAND PHYSICS PUBLISHING. AMSTERDAM, NL, vol. 151, no. 1-2, 1 December 1992 (1992-12-01), pages 134-142, XP024058575, ISSN: 0022-3093, DOI: 10.1016/0022-3093(92)90020-K [retrieved on 1992-12-01]

## Description

La présente invention concerne des compositions de verres à base d'oxyde de tellure pour le scellement verre-métal et son utilisation dans des connecteurs hermétiques tels que des connecteurs micro-D hermétiques.

Dans l'intérêt de rendre plus compact l'interconnexion de systèmes électroniques, la densité de points de connexion devient de plus en plus une performance recherchée, ce qui a conduit à miniaturiser non seulement le câble de transmission, mais également le connecteur.

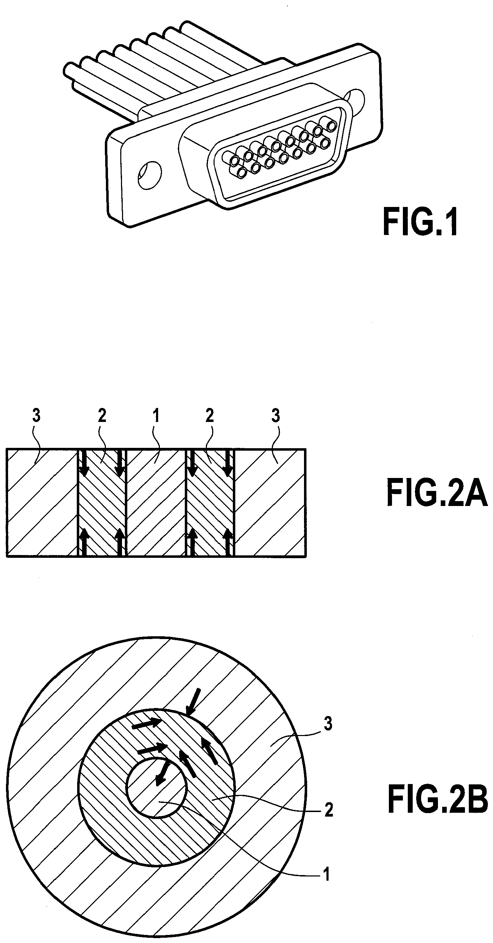

La norme Mil-DTL-83513 définit une famille de connecteurs rectangulaires mâles et femelles, dont les parties en connexion ont une forme de D. Cette famille, appelée micro-D, est caractérisée par un pas de 1,27 mm, le pas représentant la distance entraxe entre 2 points de connexion adjacents quelconques. La norme définit aussi explicitement le nombre de point de connexion (ou le nombre de contacts) qui sont respectivement de 9, 15, 21, 25, 31, 37, 51 et 100. Ces contacts sont disposés dans le connecteur en 2 ou 3 rangées comme illustré dans la figure 1.

La série de connecteurs micro-D commence à apparaître massivement sur le marché de la connexion électronique ces dernières années.

Les caractéristiques définies par la norme MIL-DTL-83513 (connectique micro-D standard) que l'on recherche pour ce type de connecteurs sont donc:
- Résistance d'isolement entre les contacts et entre les contacts et le boitier > 5 Gohm à 500V DC ;
- Pas de défauts après 5 cycles de chocs thermiques -55 +125°C ;
- Résistance aux vibrations : pas de discontinuité > 1µs à 50G ;
- Résistance aux chocs mécaniques : pas de discontinuité > 1µs à 20G ;
- Rétention du contact > 2,26kg.

Certaines applications particulières demandent des propriétés spécifiques à ces connecteurs. Deux propriétés sont de plus en plus demandées : l'herméticité et l'amagnéticité.

L'herméticité, c'est à dire l'étanchéité aux gaz, est définie par un taux de fuite. Le taux de fuite acceptable doit être déterminé pour chaque application. Pour cela, il faut que la fuite n'ait pas d'influence sur la pression d'utilisation, les gaz ou le vide présents dans l'équipement.
Les connecteurs hermétiques sont souvent utilisés pour assurer des liaisons électriques dans des équipements sous vide. Dans ces dispositifs, la durée de vie des composants est souvent liée au maintien du vide car les appareillages sont souvent sensibles (spectromètre...). Ces connecteurs peuvent également séparer deux compartiments contenant des gaz différents qui ne doivent pas se mélanger ou ne doivent pas sortir du compartiment.
De par la sensibilité de plus en plus grande des appareillages, les taux de fuite maximum demandés pour ces connecteurs sont de plus en plus faibles. Pour pouvoir mesurer des taux de fuite très faibles, c'est-à-dire en dessous de 1.10⁻⁹mbar.l/s, un détecteur de fuite à l'hélium est utilisé. L'hélium est le plus petit atome après l'hydrogène et existe sous forme de gaz inerte, à seulement 5ppm dans l'atmosphère.
La norme MIL-STD-883 est l'une des normes explicitant la méthode de mesure du taux de fuite pour les composants électroniques. Selon les conditions A4, la pièce est fixée de manière hermétique (utilisation d'un joint d'étanchéité et d'un serrage adapté) sur une chambre sous dépression. Il est avantageux d'avoir la pression la plus faible possible dans cette chambre pour avoir la meilleure sensibilité. En effet, plus la pression est faible, moins il y a de molécules de gaz dans la chambre et donc d'hélium résiduel, ce qui réduit le bruit de fond. La norme impose une pression inférieure à 0,13mbar (0,1torr). Cette chambre est reliée à un spectromètre de masse calibré pour atteindre le taux de fuite à l'hélium attendu. La calibration doit être faite à chaque période d'utilisation, grâce à une fuite calibrée de type diffusion. L'étanchéité du montage doit être vérifiée avec une plaque métallique plane. Ceci est réalisé en aspergeant la plaque d'hélium à l'aide d'un pistolet. Si le détecteur ne détecte pas d'hélium lors de cette vérification, le montage est correct et les pièces peuvent être testées de la même manière, en les aspergeant d'hélium.

L'amagnéticité représente la non-susceptibilité à être magnétisé sous un champ magnétique. Cette caractéristique est mesurée selon la procédure définie dans la norme GFSC-S-311, à l'aide d'un magnétomètre tridimensionnel. Premièrement, le champ magnétique initial est mesuré. Ensuite, la pièce est magnétisée avec un champ de 500mT à l'aide d'un aimant pendant 5min. Une nouvelle mesure de champ magnétique résiduel est effectuée. Enfin, une phase de démagnétisation est réalisée en appliquant un champ magnétique alternatif d'une valeur supérieure à 500mT. Une mesure est de nouveau réalisée.

Ainsi, les autres caractéristiques désirées pour les connecteurs, dues aux propriétés spécifiques que l'on veut apporter sont les suivantes:
- Taux de fuite à l'hélium inférieur à 1X10⁻⁹ mbar.l/s, voire inférieur à 1X10⁻¹⁰ mbar.l/s;
- Champ résiduel inférieur à 20nT;
- Température d'utilisation pouvant aller jusqu'à 200°C.
Par ailleurs, il est de plus en plus important que le connecteur soit conforme à la directive RoHS (Restriction of Hazardous Substances). Etant donné la perméabilité aux gaz des matières plastiques, du verre est souvent utilisé pour réaliser l'isolation entre les contacts et le boitier d'un connecteur hermétique. La liaison entre un ou plusieurs composants métalliques à l'aide d'une ou plusieurs parties en verre est appelée scellement verre-métal.

Le respect de la directive RoHS implique donc que le verre utilisé pour le scellement verre-métal des contacts dans le boitier du connecteur soit sans oxyde de plomb, ni aucun autre composé dont l'utilisation est restreinte par cette directive.

La grande majorité des connecteurs micro-D hermétiques sur le marché sont réalisés en combinant des alliages à faible coefficient de dilatation thermique, typiquement les alliages fer-nickel, fer-chrome ou fer-nickel-chrome, avec des verres borosilicates ou vitrocéramiques. Ces différents matériaux ont des coefficients de dilatation thermique (ou CTE pour « coefficient of thermal expansion » en anglais) très proches et assez faibles, de l'ordre de 5 à 10ppm/°C. Ceci permet aux matériaux de se dilater et de se rétreindre de la même manière lors de variations de température et d'éviter l'apparition de contraintes dans le verre. Ce type de scellement verre-métal est appelé scellement apparié.
Pour réaliser ces scellements verre-métal, les métaux sont souvent préalablement prétraités pour garantir une bonne liaison entre les matériaux. Il s'agit souvent d'une décarburation et d'une pré-oxydation. Ensuite, du verre, la plupart du temps sous forme de préformes, est maintenu en contact avec les métaux grâce à un outillage et l'ensemble est porté en température sous atmosphère contrôlée. La viscosité du verre ou de la vitrocéramique diminue et ce dernier se lie aux métaux.
Cette solution présente l'inconvénient d'utiliser des matériaux très magnétiques mais aussi très peu conducteurs (matériaux ferreux). Ceci limite énormément le courant maximal pouvant circuler dans les contacts et engendre également des déformations dans les signaux. Ainsi, le courant maximal imposé par contact pour ces connecteurs est de 1A, alors que pour les connecteurs standards non hermétiques utilisant des contacts en alliages de cuivre, l'ampérage est limité à 3A.

Des solutions hermétiques disponibles sur le marché permettent l'utilisation de contacts en alliage de cuivre bien plus conducteur. Les brevets WO9314613 et US6932644 décrivent ces connecteurs. Dans ces deux brevets, un contact en alliage de cuivre est scellé dans une partie en inox. Nous appellerons par la suite cette partie métallique dans laquelle les contacts sont scellés « insert ». Pour avoir un boitier en aluminium (ou en titane ou encore d'un autre matériau métallique), ces deux brevets font appel à une plaque multimatière, réalisée grâce à une soudure par explosion ou par friction malaxage et qui sert de joint de transition entre les métaux. Cette plaque est composée au minimum de deux métaux, liés intimement. Les deux brevets diffèrent par l'emplacement de cette partie en multimatière. Le premier utilise cette plaque pour réaliser le boitier extérieur du connecteur. Une soudure laser inox-inox est utilisée pour lier l'inox de l'insert à l'inox du boitier, faisant partie du multimatière. Le deuxième brevet dit gagner en poids et en fiabilité en utilisant cette plaque multimatière pour réaliser l'insert du boitier. Celle-ci est usinée pour que le scellement verre-métal se fasse uniquement dans l'inox et que l'aluminium présent en face arrière de l'insert se soude par laser avec le boitier extérieur, en aluminium également. Cette solution nécessite par contre de réaliser le scellement verre-métal des contacts à une température inférieure à la température de fusion de l'aluminium car il est présent dans le four lors de cette étape. Dans ces deux brevets, le scellement verre-métal est réalisé de préférence avec des vitrocéramiques (Kryoflex® et Ceramax®). Celles-ci présentent une concentration non négligeable d'oxyde de plomb (voir US4352951).
Ces deux solutions présentent l'avantage d'avoir une flexibilité au niveau du choix de la matière du boitier extérieur du connecteur : il suffit que la matière désirée puisse être liée à de l'inox par l'un des procédés cités. Mais ceci implique de nombreuses étapes de fabrication pour obtenir un connecteur : réalisation de la plaque multimatière, usinages, scellement verre-métal, soudure laser. Ceci a un impact non négligeable sur le prix final du connecteur. De plus, l'utilisation d'inox, même austénitique (304L, 316L...) implique un certain niveau de magnétisme résiduel (de l'ordre d'une centaine de nanoteslas). Un autre point dérangeant est l'utilisation d'une vitrocéramique à base d'oxyde de plomb non conforme à la directive RoHS.

Ainsi, pour éviter le magnétisme lié à l'utilisation d'inox, il semble avantageux de réaliser le scellement verre-métal directement dans un boitier en aluminium. En outre l'avantage d'utiliser l'aluminium et ses alliages pour l'herméticité est aussi dû à leur légèreté et à leur bonne dissipation thermique. En effet, ils peuvent être utilisés pour réaliser des boitiers contenant des composants électroniques produisant de la chaleur et la chaleur sera évacuée par le boitier. Cela évite l'utilisation de dissipateurs thermiques. De plus, certains alliages d'aluminium sont soudables au laser, ce qui est très intéressant pour réaliser les liaisons hermétiques avec une bonne fiabilité. Différents verres ou vitrocéramiques ont été développés pour le scellement verre-métal dans l'aluminium, souvent à base d'oxyde de plomb (US4202700, US5262364, US6037539). Peu de compositions semblent avoir conduit à des produits sur le marché, à part la composition ALSG-32. Cette composition a été développée par le Pr. Brow et a été commercialisée par de grands fournisseurs de verres (Ferro, Schott, Elan...). Des scellements verre-métal ont été réalisés avec le verre ALSG-32 à l'université de Californie à Davis et de bonnes tenues aux chocs thermiques, mécaniques et vibrations ont été observées.
Mais d'après le Pr. Brow lui-même, le design et la géométrie des pièces sont très importants pour garantir la réussite des scellements verre-métal. La difficulté consisterait à réaliser des scellements verre-métal rapprochés, c'est-à-dire avec peu d'aluminium entre deux préformes de verre/vitrocéramique. C'est le cas pour la micro-D car le pas n'est que de 1,27mm et qu'un contact de diamètre 0,40mm est souvent utilisé pour garantir une tenue mécanique suffisante. Une faible épaisseur d'aluminium signifie que les contraintes de compression sont exercées sur de petits volumes à chaque extrémité de ce métal. Ainsi, il y a plus de chances de dépasser la limite élastique en compression de l'aluminium dans ces zones, ce qui conduirait à une déformation plastique du métal. Ainsi, la compression sur le verre peut diminuer drastiquement et engendrer des défaillances dans le verre lors de montées en température. Ceci est d'autant plus vrai que la température de scellement du verre ALSG-32 est très élevée (550°C environ). L'aluminium perd donc beaucoup de ces caractéristiques mécaniques après un tel traitement thermique et sa limite élastique chute.

Quelques compositions de verre ont été élaborées sans oxyde de plomb pour le scellement verre-métal dans l'aluminium (US4202700, FR2642257, US5965469) et quelques procédés ont été développés (FR2642257). Ces verres sont à base de phosphates et sont connus pour avoir des températures de scellement basses et des CTE élevés, ce qui semble plutôt intéressant pour le scellement verre-métal de l'aluminium. De plus, les produits de base sont courants et peu chers. Toutefois, expérimentalement, les inventeurs se sont rendu compte que ces verres ne sont pas forcément adaptés aux besoins en termes de mouillabilité et surtout de résistance d'isolement (Exemple comparatif 1). Ces verres ne permettent donc pas d'obtenir des pièces avec un taux de fuite inférieur à 1X10⁻⁹ mbar.l/s. Ces verres ont également un effet capacitif, dû très certainement à une conduction ionique des ions sodium par exemple.

Des verres à base d'oxyde de tellure ont été décrits dans l'art antérieur pour le scellement verre-métal de boitiers de semi-conducteurs (US4945071, US4743302, US5013697, US5116786). Toutefois ces verres incluent de l'oxyde de plomb ce qui ne respecte pas la directive RoHS.
Seule la demande WO9310052 décrit un verre à base d'oxyde de tellure sans oxyde de plomb. Toutefois ce verre est un système binaire oxyde de tellure - oxyde de vanadium et ne suggère donc à aucun moment qu'il soit possible de supprimer l'oxyde de vanadium de sa composition. En outre de tels verres ne sont pas disponibles commercialement. Par ailleurs ce document suggère quand même l'addition d'oxyde de plomb et indique uniquement que ce type de verre peut être utilisé dans le scellement de semi-conducteurs à base de céramique. Il ne suggère donc à aucun moment qu'il puisse être utile dans le scellement verre-métal de l'aluminium ou d'alliages d'aluminium et encore moins dans le cas des connecteurs micro-D.

JP H07 330372 A concerne les compositions de verre contenant de l'oxyde de zinc et de l'oxyde de tellurium, utilisées comme matériaux de scellement.

Il est donc nécessaire de trouver de nouvelles compositions de verre respectant la directive RoHS et pouvant être utilisées pour le scellement verre-métal de boitiers de connecteurs micro-D à base d'aluminium de façon à obtenir un connecteur hermétique et éventuellement amagnétique.

Les inventeurs se sont aperçus de façon surprenante qu'il était possible d'utiliser des verres à base d'oxyde de tellure, sans oxyde de plomb ni oxyde de vanadium, pour le scellement verre-métal de contacts dans un boitier, en particulier de connecteurs type micro-D, de façon à obtenir des connecteurs hermétiques, éventuellement amagnétiques et respectant la directive RoHS, tout en utilisant des contacts en cuivre ou alliage de cuivre.

La présente invention concerne donc une composition de verre à base d'oxyde de tellure pour le scellement verre-métal d'alliages ou de métaux ayant un coefficient de dilatation thermique supérieur à 16ppm/°C, en particulier supérieur ou égal à 16,5 ppm/°C, plus avantageusement compris entre 16,5 ppm/°C et 30 ppm/°C, ladite composition étant constituée par, en pourcentage molaire:
- entre 60 et 80 % de TeO₂, avantageusement entre 62 et 80 %, encore plus avantageusement entre 64 et 79%, en particulier entre 64 et 70%, plus particulièrement environ 65% ;
- entre 5 et 35 % de ZnO, avantageusement entre 10 et 34 %, encore plus avantageusement entre 14 et 31 %, en particulier entre 18 et 31%, plus particulièrement entre 20 et 30% ;
- du TiO₂ en une teneur d'au plus 15 %,
- entre 0 et 30 % de K₂O, avantageusement entre 0 et 20 %, plus avantageusement entre 0 et 16% ;
et les impuretés inévitables,
ladite composition étant essentiellement exempte, en particulier totalement exempte, d'oxyde de plomb, d'oxyde de sodium et d'oxyde de vanadium.

Au sens de la présente invention, on entend par « scellement verre-métal » la liaison entre deux métaux ou alliages métalliques grâce au verre. Cette liaison implique dans le cas des connecteurs une liaison hermétique qui permet le passage d'une information électrique. L'isolation électrique est donc également sous-entendue.

Au sens de la présente invention, on entend par « température de scellement » la température à laquelle il faut chauffer le verre et les métaux pour obtenir le scellement, c'est à dire pour abaisser la viscosité du verre et créer une liaison entre ces matériaux

De façon avantageuse ces verres ne comprennent pas de phosphates P₂O₄. En effet les phosphates ont un impact négatif sur la mouillabilité du verre.

Au sens de la présente invention, on entend par « composition de verre à base d'oxyde de tellure » toute composition de verre dont le composant principal est de l'oxyde de tellure (TeO₂) (plus de 60% en pourcentage molaire).
Dans un mode de réalisation de la présente invention, l'alliage ou le métal ayant un coefficient de dilatation thermique supérieur à 16ppm/°C est choisi parmi :
- l'aluminium et ses alliages, avantageusement les alliages aluminium silicium, aluminium magnésium ou aluminium magnésium silicium tels que par exemple les alliages des séries 4000 (aluminium silicium), en particulier les alliages 4047 et 4032, les alliages des séries 5000 (aluminium magnésium), en particulier les alliages 5083 et 5754 et les alliages des séries 6000 (aluminium magnésium silicium), en particulier l'alliage 6061 ;
- l'inox, en particulier le 304L et le 316L,
- le cuivre et les alliages de cuivre ayant éventuellement subi un traitement de surface, en particulier nickelé ou nickelé-doré, avantageusement un alliage cuivre béryllium, tel que l'alliage cuivre-béryllium type 33, encore appelé C17300 (1,8% Be, 0,2% Co et 0,2% minimum de Pb pour l'usinabilité) ayant éventuellement subi un traitement de surface, en particulier nickelé ou nickelé-doré.
En général, les coefficients de dilatation thermique sont pour:
- l'alliage cuivre béryllium de type 33 : 17,3 ppm/°C,
- les alliages d'aluminium :
   - l'alliage 5083 : 25,2ppm/°C
   - l'alliage 5754 : 24,6ppm/°C
   - l'alliage 6061 : 23,4ppm/°C
   - l'alliage 4032 : 20,2ppm/°C
   - l'alliage 4047 :19ppm/°C
- l'Inox 304L : 17ppm/°C
- l'Inox 316L : 16,5ppm/°C

Le coefficient de dilatation thermique (CTE) est mesuré dans le cadre de la présente invention sur une TMA de chez TA instrument (TMA 2940), avec une rampe de 2°/min de 30 à 250 °C.
La composition selon la présente invention comprend du ZnO.

Le ZnO permet que la composition de verre ait une meilleure stabilité, une température de transition vitreuse Tg un peu plus élevée et un CTE un peu plus faible par rapport à du K₂O seul.

La composition de verre selon la présente invention comprend donc du TiO₂ en une teneur, en pourcentage molaire, d'au plus 15 %, plus avantageusement comprise entre 1 et 13 %, encore plus avantageusement comprise entre 4 et 11 %, en particulier entre 4 et 6%, plus particulièrement de 5%. En effet le TiO₂ semble apporter une excellente durabilité au verre.

Dans un mode de réalisation particulier la composition de verre selon la présente invention comprend en outre du K₂O, avantageusement en une teneur, en pourcentage molaire, d'au plus 30 %, avantageusement comprise entre 1 et 20 %, plus avantageusement comprise entre 4 et 16 %, en particulier comprise entre 5 et 15%. Le K₂O est avantageusement ajoutée en substitution partielle du ZnO. Ainsi avantageusement la teneur en K₂O + ZnO de la composition selon la présente invention est comprise entre 10 et 40%, plus avantageusement entre 20 et 35%, en particulier entre 25 et 35 %, en pourcentage molaire. En effet le K₂O augmente le coefficient de dilatation thermique du verre et semble également améliorer sa mouillabilité. Il permet en outre de faire baisser la température de transition vitreuse et donc la température de scellement de la composition de verre selon l'invention. Toutefois, s'il est utilisé seul, sans TiO₂, dans un verre à base d'oxyde de tellure, il diminue trop fortement la température de transition vitreuse, ce qui diminue d'autant la température d'utilisation.
Ainsi, dans ce mode de réalisation, la composition de verre selon la présente invention comprend un mélange de K₂O et de TiO₂, avantageusement en une teneur, en pourcentage molaire, de TiO₂ d'au plus 10 % et de K₂O d'au plus 20 %, plus avantageusement une teneur en TiO₂ comprise entre 1 et 10 % et une teneur en K₂O comprise entre 1 et 20 %.

Dans un autre mode de réalisation avantageux, la composition de verre selon la présente invention ne comprend pas d'In₂O₃, de Tm₂O₃, de GeO₂, de Bi₂O₃, de K₂F₂, de K₂Cl₂, de K₂Br₂, de Li₂O et/ou de B₂O₃.

Dans un mode de réalisation avantageux, la composition de verre selon la présente invention a un coefficient de dilatation thermique (CTE) compris entre 11 et 22 ppm/°C, avantageusement entre 11,5 et 19 ppm/°C, plus avantageusement entre 12 et 16 ppm/°C. Dans un mode de réalisation avantageux, la composition de verre selon la présente invention a un CTE inférieur à celui du métal ou alliage de métal destiné au scellement verre-métal.

Dans un autre mode de réalisation avantageux, la composition de verre selon la présente invention a un angle de mouillage inférieur à 100°, avantageusement compris entre 10° et 97°, en particulier entre 18° et 96°, mesuré d'une manière optique, avec un appareil photo Nikkon (D5100, objectif : AF-S Micro NiKKON 40mm 1:2.8G) et le logiciel freeware ImageJ.
Un bon angle de mouillage permet d'éviter la présence d'air entre le verre et le métal ou alliage métallique ce qui évite les problèmes d'herméticité.

Dans un autre mode de réalisation avantageux, la composition de verre selon la présente invention a une température de transition vitreuse (Tg) inférieure à 500°C, avantageusement comprise entre 250 et 400°C, en particulier comprise entre 300 et 350°C. Une faible température de transition vitreuse permet d'obtenir un scellement verre-métal à plus faible température, ce qui est utile pour le scellement verre-métal d'alliages d'aluminium qui ont une faible température de fusion. En effet ceci évite donc le ramollissement de ses alliages lors du procédé de scellement verre-métal. Toutefois, une température de transition vitreuse trop faible n'est pas intéressante dans le cadre de la présente invention car il convient d'obtenir un connecteur ayant une tenue en température d'au moins 200°C.
La Tg est mesurée grâce à un DSC (Differential scanning calorimetry): DSC setaram (DSC 131). La mesure est effectuée de 20 à 580 °C avec une rampe de 10°C/min. Les températures Tg et Tx sont les températures onset (de début de phénomène)

Dans un autre mode de réalisation avantageux, la composition de verre selon la présente invention a une durabilité chimique comprise entre 1X10⁻⁵ et 1X10⁻⁷ g/(cm².min), déterminée en soxhlet à 95°C dans de l'eau déminéralisée et renouvelée continuellement selon la norme ISO16797.

Des exemples de composition de verre selon la présente invention sont rassemblés dans le tableau 1 ci-dessous :

**Tableau 1 : Données générales sur des compositions de verres selon l'invention**

| verre | composition | Tg (°C) | CTE (ppm/°C) |
|---|---|---|---|
| **1** | **(TeO₂)₇₀(TiO₂)₁₀(ZnO)₁₅** | 348 | 11,2 |
| **2** | **(TeO₂)₆₅(TiO₂)₅(ZnO)₃₀** | 346 | 13,6 |
| **3** | **(TeO₂)₆₅(TiO₂)₅(ZnO)₂₅(K₂O)₅** | 327 | 14,6 |
| **4** | **(TeO₂)₆₅(TiO2)₅(ZnO)₂₂(K2O)_{6.3}** | 320 | 15,5 |
| **5** | **(TeO₂)₆₅(TïO₂)₅(ZnO)₂₂(K₂O)₈** | 310 | 16 |
| **6** | **(TeO₂)₆₅(TiO₂)₅(ZnO)₂₀(K₂O)₁₀** | 296 | 18,4 |
| **7** | **(TeO₂)₆₅(TiO₂)₅(ZnO)₁₅(K₂O)₁₅** | 273 | 21,5 |

La présente invention concerne en outre l'utilisation de la composition de verre selon l'invention, en particulier telle que décrite ci-dessus, pour le scellement verre-métal du cuivre ou d'un alliage de cuivre, ayant éventuellement subi un traitement de surface (dépôt d'une couche métallique en surface), en particulier nickelé ou nickelé-doré, avantageusement un alliage cuivre béryllium, ayant éventuellement subi un traitement de surface, en particulier nickelé ou nickelé-doré, avec un alliage ou un métal ayant un coefficient de dilatation thermique supérieur à 16ppm/°C, en particulier différent du cuivre ou d'un alliage de cuivre.

Au sens de la présente invention on entend par « cuivre ou alliage de cuivre nickelé», tout cuivre ou alliage de cuivre ayant subi un traitement de surface de façon à déposer une fine couche de nickel à sa surface, en particulier par électrolyse ou par un procédé de dépôt chimique. Cette couche de nickel comprend en général également du phosphore, avantageusement en une teneur en pourcentage molaire comprise entre 5 et 12%, en particulier pour rendre cette couche amagnétique, une teneur en pourcentage molaire comprise entre 10,5 et 12%. L'épaisseur de cette couche est en général comprise entre 1 et 20 µm, en particulier entre 1 et 15 µm avantageusement entre 1 et 7 µm. Cette couche peut être complétée par une couche d'or. On parle alors de « cuivre ou alliage de cuivre nickelé-doré » selon la présente invention. Dans ce cas, chaque couche a avantageusement une épaisseur comprise entre 1 et 10 µm, en particulier entre 1 et 7 µm.

Dans un mode de réalisation avantageux, l'alliage ou métal ayant un coefficient de dilatation thermique supérieur à 16ppm/°C est tel que décrit ci-dessus. En particulier l'alliage ou métal ayant un coefficient de dilatation thermique supérieur à 16ppm/°C autre que du cuivre ou qu'un alliage de cuivre est choisi parmi l'aluminium et ses alliages et l'inox, avantageusement il s'agit d'un alliage d'aluminium, en particulier choisi parmi un alliage aluminium silicium, aluminium magnésium ou aluminium magnésium silicium, plus particulièrement tels que décrits ci-dessus.

Dans un mode de réalisation particulièrement avantageux de l'utilisation selon l'invention, le scellement verre-métal est effectué dans un connecteur, avantageusement un connecteur miniature, en particulier un connecteur micro-D (selon la norme Mil-DTL-83513), entre un contact en cuivre ou en alliage de cuivre, en particulier en alliage de cuivre tel qu'un alliage cuivre béryllium, ayant éventuellement subi un traitement de surface, en particulier nickelé ou nickelé-doré, et un insert et/ou boîtier en métal ou alliage ayant un coefficient de dilatation thermique supérieur à 16ppm/°C.

La présente invention concerne de plus un connecteur comprenant un contact en cuivre ou en alliage de cuivre, ayant éventuellement subi un traitement de surface, en particulier nickelé ou nickelé-doré, avantageusement en alliage cuivre béryllium, ayant éventuellement subi un traitement de surface, en particulier nickelé ou nickelé-doré, un insert et/ou boîtier en métal ou alliage ayant un coefficient de dilatation thermique supérieur à 16ppm/°C, en particulier autre que du cuivre ou qu'un alliage de cuivre, et un matériau de scellement verre-métal entre le contact et l'insert et/ou boîtier, caractérisé en ce que le matériau de scellement est un verre à base d'oxyde de tellure ayant la composition selon l'invention, en particulier telle que décrite ci-dessus.

De façon avantageuse, l'alliage ou métal ayant un coefficient de dilatation thermique supérieur à 16ppm/°C est tel que décrit ci-dessus.

En particulier, le connecteur selon l'invention est un connecteur miniature, plus particulièrement un connecteur micro-D (selon la norme Mil-DTL-83513).

Dans un mode de réalisation avantageux, le connecteur selon l'invention est hermétique avec un taux de fuite à l'hélium inférieur à 1X10⁻⁹ mbar.l/s, avantageusement inférieur à 3X10⁻¹⁰ mbar.l/s, mesuré à l'aide d'un détecteur de fuite à l'hélium (ASM 142 d'Adixen) selon les conditions A4 de la norme MIL-STD-883.

Dans un autre mode de réalisation avantageux, le connecteur selon l'invention présente une résistance d'isolement entre les contacts et entre chaque contact et l'insert et/ou boitier > 5 Gohms, avantageusement > 10 Gohms, en particulier > 20 Gohms, mesurée à l'aide d'un mégohmmètre à 500V DC, en particulier l'appareil Cable test, Horizon II, modèle HV4.

Dans encore un autre mode de réalisation avantageux, le connecteur selon l'invention a une température d'utilisation pouvant aller jusqu'à 200 °C.

Avantageusement, l'alliage de cuivre ou le cuivre du contact n'est pas nickelé et l'alliage ou métal ayant un coefficient de dilatation thermique supérieur à 16ppm/°C est choisi parmi l'aluminium et ses alliages. De façon avantageuse, dans ce cas, le connecteur selon l'invention est amagnétique avec un magnétisme rémanent < 20nT, mesuré selon la norme GFSC-S-311, à l'aide d'un magnétomètre tridimensionnel MEDA FVM400.

La présente invention concerne enfin un procédé de scellement verre-métal d'un contact en cuivre ou en alliage de cuivre, ayant éventuellement subi un traitement de surface, en particulier nickelé ou nickelé-doré, dans un insert et/ou boîtier en métal ou alliage ayant un coefficient de dilatation thermique supérieur à 16ppm/°C, en particulier autre que du cuivre ou qu'un alliage de cuivre, comprenant les étapes successives suivantes
- a) fourniture d'un contact en cuivre ou en alliage de cuivre, en particulier en alliage cuivre béryllium, ayant éventuellement subi un traitement de surface, en particulier nickelé ou nickelé-doré, et d'un insert et/ou boîtier en métal ou alliage ayant un coefficient de dilatation thermique supérieur à 16ppm/°C,
- b) fourniture d'une préforme, avantageusement sous forme cylindrique, de verre à base d'oxyde de tellure ayant la composition selon la présente invention et en particulier telle que décrite ci-dessus ;
- c) mise en contact de la préforme avec le contact et avec l'insert et/ou le boîtier;
- d) maintien du contact de l'ensemble contact - préforme - insert et/ou boîtier à l'aide d'un outillage adapté ;
- e) chauffage de l'ensemble contact - préforme - insert et/ou boîtier à une température et pendant un temps suffisant pour obtenir le scellement verre-métal;
- f) récupération de l'ensemble ainsi scellé.

De façon avantageuse, l'alliage ou métal ayant un coefficient de dilatation thermique supérieur à 16ppm/°C est tel que décrit ci-dessus.

Dans un mode de réalisation particulier du procédé selon la présente invention, la température de l'étape e) est comprise entre 350 et 500°C, en particulier entre 400 et 500°C, plus particulièrement entre 440 et 500°C.

Dans un autre mode de réalisation du procédé selon la présente invention le temps de chauffage de l'étape e) est compris entre 15 minutes et 2 heures, en particulier entre 30 minutes et 1 heure.

Le chauffage de l'étape e) peut être réalisé par exemple à l'aide d'un four ou par induction.

L'invention sera mieux comprise à la lumière de la description des figures et des exemples qui suivent.
La figure 1 représente un exemple d'un connecteur micro-D femelle 15 points selon la norme Mil-DTL-83513.
La figure 2 représente une vue schématique d'un scellement en compression en coupe (figure 2A) et en vue de dessus (figure 2B) d'un contact (1) dans un boitier (3) à l'aide de verre (2) selon l'invention.

### Exemple 1 : scellement verre-métal entre des contacts en alliage de cuivre et un boitier en alliage d'aluminium avec des compositions de verre selon l'invention

Les verres dont la composition est indiquée dans le tableau 2 suivant ont été fabriqués.

**Tableau 2 : Données générales sur 3 compositions de verres selon l'invention**

| **verre** | **composition** | **Tg (°C)** | **CTE (ppm/°C)** | **Durabilité (g/(min.cm2))** |
|---|---|---|---|---|
| **2** | **(TeO₂)₆₅(TiO₂)₅(ZnO)₃₀** | 346 | 13,6 | 1,97X10⁻⁷ |
| **4** | **(TeO2)₆₅(TiO2)₅(ZnO)₂₂(K2O)_{6.3}** | 320 | 15,5 | 3,15X10⁻⁷ |
| **5** | **(TeO₂)₆₅(TiO₂)₅(ZnO)₂₂(K₂O)₈** | 310 | 16 | 2,5x10⁻⁷ |
| **6** | **(TeO₂)₆₅(TiO₂)₅(ZnO)₂₀(K₂O)₁₀** | 296 | 18,4 | |

Les valeurs de durabilité chimique ont été déterminées en soxhlet à 95°C dans de l'eau déminéralisée et renouvelée continuellement selon la norme ISO16797. Ceci est un test très critique car la vitesse de dissolution reste à son maximum durant toute la durée (pas de saturation de l'eau).

Les scellements verre-métal avec ces compositions de verre sont réalisés dans des boitiers en alliage d'aluminium des familles 4000, 5000 ou 6000 : du 4047, 4032, 5083, 5754 ou 6061.

Le contact utilisé est en alliage de cuivre : du cuivre béryllium type 33, encore appelé C17300 (1,8% Be, 0,2% Co et 0,2% minimum de Pb pour l'usinabilité). Le verre est apporté sous forme d'une préforme cylindrique autour de chaque contact.

Pour réaliser les scellements verre-métal, l'ensemble métaux-préformes de verre est maintenu en place à l'aide d'un outillage adapté.

La chauffe est réalisée dans un four, sans atmosphère protégée à la température et pendant les durées indiquées dans le tableau 3.

Le scellement verre-métal se fait en compression au niveau du boitier comme schématisé dans la Figure 2. Le verre se retrouve ainsi en compression de toute part, sauf au niveau du contact où il y a une extension radiale.

La résistance d'isolement est mesurée à l'aide d'un mégohmmètre sous 500V DC. Les résistances d'isolement obtenues atteignent la limite de détection de l'appareil (20 Gohm).

L'herméticité à l'hélium est mesurée à l'aide d'un détecteur de fuite à l'hélium (ASM 142 d'Adixen) selon la norme MIL-STD-883, conditions A4. Les taux de fuite mesurés sont à la limite de détection de l'appareil lors d'une mesure rapide, c'est-à-dire inférieure à 1 minute de mesure (3X10⁻¹⁰mbar.l/s).

Pour la détermination de l'angle de mouillage Θ, le verre est déposé sur une feuille d'aluminium et exposé dans un four à la température indiquée pendant la durée indiquées dans le tableau 3 (même température et même durée que pour le procédé de scellement verre-métal). L'ensemble est ensuite sorti du four et le verre se fige immédiatement. L'angle est ensuite déterminé d'une manière optique, avec un appareil photo Nikkon (D5100, objectif : AF-S Micro NiKKON 40mm 1:2.8G) et le logiciel freeware ImageJ.

Le Tableau 3 suivant présente les résultats obtenus avec ces verres.

**Tableau 3 : Données expérimentales obtenues avec les verres selon l'invention dans le procédé selon l'exemple 1**

| verre | Temps/température (min/°C) de l'opérateur de scellement | Θ (°) | Herméticité à l'hélium (mbar.l/s) | Résistance d'isolement (Gohm) | Magnétisme résiduel (nT) |
|---|---|---|---|---|---|
| 2 | 60 / 440 | 70-74 | < 3X10⁻¹⁰ | >20 | <20 |
| | 60 / 460 | 42-39 | | | |
| 4 | 30/480 | 98-103 | < 3X10⁻¹⁰ | >20 | <20 |
| | 30/500 | 49-50 | | | |
| 5 | 60 / 440 | 96-87 | < 3X10⁻¹⁰ | >20 | <20 |
| | 30 / 500 | 18-29 | | | |
| 6 | 60 / 440 | 41-39 | < 3X10⁻¹⁰ | >20 | <20 |
| | 30 / 500 | 21-28 | | | |
| | 30 / 500 | 18-29 | | | |

Les différents scellements verre-métal réalisés ont ensuite été exposés à 5 cycles de chocs thermiques -55°C +125°C, avec des paliers de 30 minutes dans des enceintes climatiques de type choc vertical par exemple de la marque Climats.
L'herméticité a été de nouveau mesurée : toutes les pièces gardent leur herméticité et la valeur mesurée est la limite de détection de l'appareil.
Cinq cycles de chocs thermiques allant de -55°C à +200°C ont ensuite été réalisés sur les mêmes pièces. L'herméticité mesurée a révélé que, encore une fois, les pièces ont un taux de fuite inférieur à la limite de détection de l'appareil.

Ces verres sont donc adaptés pour le scellement verre-métal de connecteurs. Il est ainsi possible d'obtenir grâce à ces verres, des connecteurs, avec des contacts en alliage de cuivre, hermétiques, amagnétiques, conformes à la directive RoHS et ayant une température d'utilisation pouvant aller jusqu'à 200°C.

### Exemple 2 : scellement verre-métal entre des contacts en alliage de cuivre nickelé ou nickelé-doré et un boitier en alliage d'aluminium avec des compositions de verre selon l'invention

Deux des compositions de verre décrites dans l'exemple 1 (verres numéro 2 et 5) ont été utilisées pour le scellement verre-métal de contact en alliage de cuivre béryllium nickelé ou nickelé-doré sur un boitier en alliage d'aluminium selon l'exemple 1. Le procédé de scellement verre-métal et les méthodes de mesure sont identiques à ceux de l'exemple 1.

Seul le contact est différent puisque différents traitements de surface ont été réalisés sur les contacts en alliage de cuivre béryllium de l'exemple 1 : contacts nickelés et nickelés-dorés. Dans tous les cas, du nickel (Ni) chimique a été utilisé avec différent taux de phosphore (P). Dans le cas des contacts nickelés-dorés, de l'or (Au) allié nickel a été déposé par électrolyse après le dépôt de nickel.

Le Tableau 4 suivant présente les résultats obtenus avec ces verres.

**Tableau 4 : Données expérimentales obtenues avec les verres selon l'invention dans le procédé selon l'exemple 2**

| **Verre** | **Traitement de surface du contact** | **Herméticité à l'hélium (mbar.l/s)** | **Résistance l'isolement** | **Magnétisme résiduel (nT)** |
|---|---|---|---|---|
| **5** | 6µm Ni 11% P + 6µm Au | < 3X10⁻¹⁰ | >20 | >20 |
| **2** | 6µm Ni 11% P + 6µm Au | < 3X10⁻¹⁰ | >20 | >20 |
| **2** | 3µm Ni 6% P | < 3X10⁻¹⁰ | >20 | >20 |
| **2** | 5µm Ni 6% P | < 3X10⁻¹⁰ | >20 | >20 |
| **2** | 10µm Ni 11% P | < 3X10⁻¹⁰ | >20 | >20 |

Il est possible d'obtenir grâce à ces verres, des connecteurs hermétiques, conformes à la directive RoHS et avec des contacts en alliage de cuivre nickelé ou nickelé-doré. Toutefois ces connecteurs ne sont pas amagnétiques, même si les contacts le sont au départ (si le pourcentage de phosphore dans la couche de traitement de surface est supérieur ou égale à 10,5%).

### Exemple 3 : scellement verre-métal entre des contacts en alliage de cuivre et un boitier en inox avec des compositions de verre selon l'invention

Une des compositions de verre décrite dans l'exemple 1 (verre numéro 2) a été utilisée pour le scellement verre-métal de contact en alliage de cuivre béryllium selon l'exemple 1 sur un boitier en inox 304L et 316L. Le procédé de scellement verre-métal et les méthodes de mesure sont identiques à ceux de l'exemple 1. Seul le boitier est différent puisqu'il s'agit d'un boitier en inox.

Le Tableau 5 suivant présente les résultats obtenus avec ce verre.

**Tableau 5 : Données expérimentales obtenues avec les verres selon l'invention dans le procédé selon l'exemple 3**

| **verre** | **Herméticité à l'hélium (mbar.l/s)** | **Résistance d'isolement (Gohm)** |
|---|---|---|
| **2** | < 3X10⁻¹⁰ | >20 |

Le scellement verre-métal dans l'inox ne permet pas d'obtenir des connecteurs amagnétiques. Toutefois les connecteurs obtenus avec la composition de verre selon l'invention sont hermétiques.

Il est donc possible de réaliser des connecteurs micro-D hermétiques avec un boitier inox et des contacts en alliage de cuivre avec un verre sans oxyde de plomb.

### Exemple comparatif 1 : les verres de phosphate

5 compositions de verres au phosphate ont été testées pour le scellement de contacts en alliage de cuivre béryllium dans un boitier en alliage d'aluminium. Les verres au phosphate sont généralement connus pour leur absorption d'eau importante. Les compositions ont donc été optimisées pour améliorer la durabilité par la présence d'oxydes acides tels qu'Al₂O₃, qui créent des groupes AlPO₄ renforçant le réseau, ou la présence d'amphotères comme Nb₂O₅.

Les verres dont la composition est indiquée dans le tableau 6 suivant ont donc été fabriqués.

**Tableau 6 : Données générales sur 5 compositions de verres de phosphate**

| **verres** | **Composition** | **Tg (°C)** | **CTE (ppm/°C)** | **Durabilité (g/cm².min)** |
|---|---|---|---|---|
| **11** | (NaPO₃)₃₆(KPO₃)₃₆(Ba(PO₃)₂)₁₂(Al₂O₃)₈(Al(PO₃)₃)₈ | 380 | 15 | 1,23X10⁻⁶ |
| **12** | (NaPO₃)₃₅(KPO₃)₃₅(Ca₂(P₂O₇)₂)₁₀(Al₂O₃)_{3.65}(Al(PO₃ )₃)_{1.65}(ZnO)₁₅ | 380 | 14,2 | 1,68X10⁻⁶ |
| **14** | (NaPO₃)_{37.5}(KPO₃)_{37.5}(Ba(PO₃)₂)_{12.5}(Nb₂O₅)_{12.5} | 381 | 16,8 | 1,28X10⁻⁵ |
| **32** | (NaPO₃)₃₅(KPO₃)₃₅(Ca₂(P₂O₇)₂)₁₀(Al₂O₃)_{3.65}(Al(PO₃ )₃)_{1.65}(ZnF₂)₁₅ | 360 | 13 | - |
| **34** | (NaPO₃)₃₅(KPO₃)₃₅(Ca₂(P₂O₇)₂)₁₀(Al₂O₃)_{3.65}(Al(PO₃ )₃)_{1.65}(ZnF₂)₁₀(CuF₂)₅ | 362 | 12,9 | - |

Pour les scellements verre-métal, les métaux et le procédé utilisés sont les mêmes que dans l'exemple 1. La chauffe est réalisée dans un four sous atmosphère, mais on pourrait envisager d'autres modes de chauffe pour réaliser le scellement verre-métal.

### Les méthodes de mesure sont identiques à celles de l'exemple 1

Le Tableau 7 suivant présente les résultats obtenus avec ces verres.

**Tableau 7 : Données expérimentales obtenues avec les verres de phosphate**

| **verres** | **Temps (min) / Température (°C) de l'opération de scellement** | **Θ (°)** | **Herméticité à l'hélium (mbar.l/s)** | **Résistance d'isolement (Gohm)** | **Magnétisme résiduel (nT)** |
|---|---|---|---|---|---|
| **11** | - | - | 9,5X10⁻⁶ - 5,2X10⁻⁸ | 0,3-14 | <20 |
| **12** | 60 / 500 | 104-108 | 4X10⁻⁴ - 4X10⁻⁹ | 0,2-0,5 | <20 |
| **14** | - | - | >10⁻⁵ | 1,2-2,2 | <20 |
| **32** | 60 / 480 | 115 | 1,3X10⁻⁵ | 2 | <20 |
| **34** | 60 / 500 | 113-117 | 4X10⁻⁵ | 0,1 | <20 |

Ces verres ne sont donc pas adaptés aux besoins en termes de mouillabilité et surtout de résistance d'isolement.

En effet, les angles de mouillage déterminés tout comme les scellements verre-métal réalisés, montrent un manque de mouillabilité évidant au niveau de l'aluminium. Il a été remarqué que même en augmentant la température et le temps dans le four, ces verres ne présentent pas de meilleures mouillabilités. Ces verres ne permettent donc pas d'obtenir des pièces avec un taux de fuite inférieur à 1X10⁻⁹ mbar.l/s.

De plus, la résistance d'isolement n'est absolument pas stable selon les essais, certainement à cause de la présence plus ou moins importante d'air entre le verre et l'aluminium. Ces verres ont également un effet capacitif, dû très certainement à une conduction ionique, des ions sodium par exemple.

### Exemple comparatif 2 : les verres de chalcogénures

Trois verres de chalcogénures ont été synthétisés car ils présentaient des Tg et des CTE qui pouvaient correspondre aux besoins d'après la littérature.

Leurs caractéristiques sont présentées dans le tableau 8 ci-après.

**Tableau 8 : Données générales sur 3 compositions de verres de chalcogénures**

| **verre** | **Composition** | **Tg (°C)** | **CTE (ppm/°C)** |
|---|---|---|---|
| **20** | Ge₂₅Sb₁₀S₆₅ +10% CsCl | 260 | env 20 |
| **22** | Ge₂₆Sb₁₀S₂₄ | 340 | env 16 |
| **26** | 15 Ga₂S₃ - 75 GeS₂ - 10 CsCl | 370 | env 20 |

Ces verres ont été abandonnés après des essais de mouillabilité car ils nécessitent un scellement verre-métal sous atmosphère contrôlée pour éviter leur oxydation.

### Exemple comparatif 3 : les verres alcalins

Un verre alcalin sans oxyde de plomb disponible commercialement sous la dénomination Msoft 5 chez la société Mansol preforms a été testé dans le cadre de scellement verre-métal de contacts en alliages de cuivre sur un boitier en alliage d'aluminium.

Ses caractéristiques sont présentées dans le tableau 9 ci-après.

**Tableau 9 : Données générales sur la composition du verre alcalin**

| **Dénomination commerciale** | **Type de verre** | **CTE (ppm/°C)** | **Température de scellement (°C)** |
|---|---|---|---|
| Msoft 5 | Verre alcalin | 16,0 | 560-600 |

Pour réaliser les scellements verre-métal, le même procédé que celui dans l'exemple 1 a été suivi avec une température de 570°C pendant 1 heure, seul le verre testé a été changé. Mais il n'a pas été possible de réaliser des pièces dont le taux de fuite est mesurable avec les alliages 4000 et 5083. Ces derniers ont une température de fusion assez faible et leur surface se déforme et s'oxyde énormément lors du scellement verre-métal. La surface n'est donc plus assez lisse pour assurer une compression uniforme du joint d'étanchéité et une fixation hermétique.

### Les méthodes de mesure sont identiques à celles de l'exemple 1

Le Tableau 10 suivant présente les résultats obtenus avec ce verre.

**Tableau 10 : Données expérimentales obtenues avec un verre alcalin**

| **Contact** | **Taux de fuite l'hélium (mbar.l/s)** | **Resistance d'isolement (Gohm)** | **Magnétisme résiduel (nT)** |
|---|---|---|---|
| Contact nu | <3X10⁻¹⁰ | 0,2-0,5 | <20 |
| Contact nickelé (10µm Ni 11% P) | <3X10⁻¹⁰ | 0,3-1 | >20 |

Le taux de fuite à l'hélium obtenu sur les différents connecteurs est en-dessous de la limite de détection de l'appareil de mesure lors d'une mesure rapide, c'est-à-dire inférieure à 1 minute de mesure. Par contre, la résistance d'isolement mesurée est bien inférieure à celle désirée. Un effet capacitif est observé, c'est-à-dire que la résistance augmente avec le temps d'application de la tension, comme lors de la charge d'un condensateur. Ceci est typique d'une conduction ionique. Le verre étant à base d'alcalins, il est fortement probable que de petits ions alcalins, tels que les ions sodium, soient responsables de cette conduction. En effet, ces ions étant petits, ils peuvent facilement se déplacer dans le verre si les liaisons iono-covalentes les liant au reste du réseau ont une énergie trop faible par rapport l'attraction de la tension négative appliquée.

Ainsi, lors de l'application de la tension, les ions Na⁺ se déplacent vers l'électrode négative. La résistance est donc très faible au départ. Puis, elle augmente au fur et à mesure que les ions atteignent ce pôle. Lors d'une inversion de polarité, ce phénomène recommence.

Pour augmenter la résistance d'isolement, des essais ont été réalisés en pré-oxydant la surface du contact (voir Tableau 11 ci-dessous). En effet, la couche d'oxyde rajoute une couche isolante entre le contact et le verre, ce qui est susceptible d'augmenter la résistance d'isolement.

**Tableau 11 : Données expérimentales obtenues avec un verre alcalin et un contact pré-oxydé**

| **Contact temps et température de la préoxydation Taux de fuite à l'hélium (mbar.l/s)** | | **Résistance d'isolement (Gohm)** | **Magnétisme résiduel (nT)** |
|---|---|---|---|
| Contact nu pré-oxydé (200°C/5min) | <3X10⁻¹⁰ | 1-2 | <20 |
| Contact nickelé puis pré-oxydé (530°C/10min) | <3X10⁻¹⁰ | 1-22 | >20 |

Malheureusement, il y a une grande variabilité de résistance d'isolement selon les essais. Deux raisons peuvent expliquer cette observation.

Premièrement, les épaisseurs d'oxyde créées ne sont peut-être pas toujours les même, et lors du scellement verre-métal, l'oxyde peut se dissoudre dans le verre. Ainsi, si l'oxyde n'est pas assez épais par endroits, on peut se retrouver avec des zones sans oxyde après scellement verre-métal.

Deuxièmement, lors de la mise en place du contact dans l'outillage, de l'oxyde pourrait être enlevé lors des manipulations. En effet, il suffirait d'une griffure enlevant l'oxyde pour éliminer localement cette couche isolante.

Obtenir une résistance d'isolement suffisante n'est donc pas une chose aisée et il est risqué de se baser uniquement sur l'oxyde pour la garantir.

Ce verre alcalin ne peut donc pas être utilisé dans l'application visée.

## Revendications

1. Composition de verre à base d'oxyde de tellure pour le scellement verre-métal d'alliages ou de métaux ayant un coefficient de dilatation thermique supérieur à 16ppm/°C, ladite composition étant constituée par, en pourcentage molaire :
- entre 60 et 80 % deTeO₂, avantageusement entre 64 et 79 % ;
- entre 5 et 35 % de ZnO, avantageusement entre 14 et 31 % ;
- du TiO₂,
- entre 0 et 30 % de K₂O, avantageusement entre 0 et 20 % ;
- et les impuretés inévitables,
ladite composition étant essentiellement exempte d'oxyde de plomb, d'oxyde de sodium et d'oxyde de vanadium et la teneur en TiO₂ étant d'au plus 15 %.

2. Composition de verre selon la revendication 1, **caractérisée en ce que** l'alliage ou le métal ayant un coefficient de dilatation thermique supérieur à 16ppm/°C est choisi parmi l'aluminium et ses alliages, avantageusement un alliage aluminium silicium, aluminium magnésium ou aluminium magnésium silicium, l'inox, le cuivre et les alliages de cuivre éventuellement nickelés ou nickelés-dorés, avantageusement un alliage cuivre béryllium éventuellement nickelé ou nickelé-doré.

3. Composition de verre selon l'une quelconque des revendications 1 ou 2, **caractérisée en ce que** ce qu'elle comprend du TiO₂ en une teneur en pourcentage molaire comprise entre 1 et 13 %, plus avantageusement comprise entre 4 et 11 %.

4. Composition de verre selon l'une quelconque des revendications 1 à 3, **caractérisée en ce que** ce qu'elle comprend du K₂O en une teneur en pourcentage molaire d'au plus 30 %, avantageusement comprise entre 1 et 20 %, plus avantageusement comprise entre 4 et 16 %.

5. Composition de verre selon l'une quelconque des revendications 1 à 4, **caractérisée en ce que** le coefficient de dilatation thermique du verre est compris entre 11 et 22 ppm/°C, avantageusement entre 12 et 16 ppm/°C.

6. Utilisation de la composition de verre selon l'une quelconque des revendications 1 à 5 pour le scellement verre-métal du cuivre ou d'un alliage de cuivre, éventuellement nickelé ou nickelé-doré, avantageusement un alliage cuivre béryllium, éventuellement nickelé ou nickelé-doré, avec un alliage ou un métal ayant un coefficient de dilatation thermique supérieur à 16ppm/°C, en particulier autre que du cuivre ou qu'un alliage de cuivre.

7. Utilisation selon la revendication 6, **caractérisée en ce que** l'alliage ou métal ayant un coefficient de dilatation thermique supérieur à 16ppm/°C autre que du cuivre ou qu'un alliage de cuivre est choisi parmi l'aluminium et ses alliages et l'inox, avantageusement il s'agit d'un alliage d'aluminium choisi parmi un alliage aluminium silicium, aluminium magnésium ou aluminium magnésium silicium.

8. Utilisation selon l'une quelconque des revendications 6 ou 7, **caractérisé en ce que** le scellement verre-métal est effectué dans un connecteur, avantageusement un connecteur micro-D, entre un contact en cuivre ou en alliage de cuivre, éventuellement nickelé ou nickelé-doré, et un insert et/ou boîtier en alliage ou métal ayant un coefficient de dilatation thermique supérieur à 16ppm/°C.

9. Connecteur comprenant un contact en cuivre ou en alliage de cuivre, éventuellement nickelé ou nickelé-doré, avantageusement en alliage cuivre béryllium, éventuellement nickelé ou nickelé-doré, un insert et/ou boîtier en métal ou alliage ayant un coefficient de dilatation thermique supérieur à 16ppm/°C et un matériau de scellement verre-métal entre le contact et l'insert et/ou boîtier, **caractérisé en ce que** le matériau de scellement est un verre à base d'oxyde de tellure ayant la composition telle que définie dans l'une quelconque des revendications 1 à 5.

10. Connecteur selon la revendication 9, **caractérisé en ce que** l'alliage ou métal ayant un coefficient de dilatation thermique supérieur à 16ppm/°C est choisi parmi l'aluminium et ses alliages et l'inox, avantageusement il s'agit d'un alliage d'aluminium choisi parmi un alliage aluminium silicium, aluminium magnésium ou aluminium magnésium silicium.

11. Connecteur selon l'une quelconque des revendications 9 ou 10, **caractérisé en ce qu'**il s'agit d'un connecteur micro-D.

12. Connecteur selon l'une quelconque des revendications 9 à 11, **caractérisé en ce qu'**il est hermétique avec un taux de fuite à l'hélium inférieur à 3X10⁻¹⁰ mbar.l/s, présente une résistance d'isolement entre les contacts et entre chaque contact et l'insert et/ou boitier > 5 Gohms et a une température d'utilisation pouvant aller jusqu'à 200 °C.

13. Connecteur selon l'une quelconque des revendications 9 à 12, **caractérisé en ce que** l'alliage de cuivre ou le cuivre du contact n'est pas nickelé, **en ce que** l'alliage ou métal ayant un coefficient de dilatation thermique supérieur à 16ppm/°C est choisi parmi l'aluminium et ses alliages et **en ce que** le connecteur est amagnétique avec un magnétisme rémanent < 20nT.

14. Procédé de scellement verre-métal d'un contact en cuivre ou en alliage de cuivre, éventuellement nickelé ou nickelé-doré, dans un insert et/ou boîtier en métal ou alliage ayant un coefficient de dilatation thermique supérieur à 16ppm/°C, en particulier autre que du cuivre ou qu'un alliage de cuivre, comprenant les étapes successives suivantes
- a) fourniture d'un contact en cuivre ou en alliage de cuivre, éventuellement nickelé ou nickelé-doré, et d'un insert et/ou boîtier en métal ou alliage ayant un coefficient de dilatation thermique supérieur à 16ppm/°C, en particulier autre que du cuivre ou qu'un alliage de cuivre ;
- b) fourniture d'une préforme de verre à base d'oxyde de tellure ayant la composition telle que définie dans l'une quelconque des revendications 1 à 5 ;
- c) mise en contact de la préforme avec le contact et avec l'insert et/ou le boîtier;
- d) maintien du contact de l'ensemble contact - préforme - insert et/ou boîtier à l'aide d'un outillage adapté ;
- e) chauffage de l'ensemble contact - préforme - insert et/ou boîtier à une température et pendant un temps suffisant pour obtenir le scellement verre-métal;
- f) récupération de l'ensemble ainsi scellé.

15. Procédé selon la revendication 14, **caractérisé en ce que** la température de l'étape e) est comprise entre 350 et 500°C.

## Patentansprüche

1. Glaszusammensetzung auf der Basis von Telluroxid zur glasmetallischen Versiegelung von Legierungsmetall oder Metallen mit einem Wärmeausdehnungskoeffizienten von mehr als 16 ppm/°C, wobei die Zusammensetzung in Molprozent besteht aus:
- zwischen 60 und 80 % vorteilhaft zwischen 64 und 79 %, TeO₂,
- zwischen 5 und 35 % vorteilhaft zwischen 14 und 31 %, ZnO,
- TiO₂,
- zwischen 0 und 30 % vorteilhaft zwischen 0 und 20 %, K₂O,
- und unvermeidbaren Verunreinigungen,
wobei die Zusammensetzung im Wesentlichen frei von Bleioxid, Natriumoxid und Vanadiumoxid ist und wobei der Gehalt an TiD₂höchstens 15 % beträgt.

2. Glaszusammensetzung nach Anspruch 1, **dadurch gekennzeichnet, dass** die Legierung oder das Metall mit einem Wärmeausdehnungskoeffizienten von mehr als 16 ppm/°C aus Aluminium und seinen Legierungen, vorteilhaft einer Aluminium-Silizium-, Aluminium-Magnesium- oder Aluminium-Magnesium-Silizium-Legierung, rostfreiem Stahl, Kupfer und eventuell vernickelten oder vernickelten-vergoldeten Kupferlegierungen, vorteilhaft einer eventuell vernickelten oder vernickelten-vergoldeten Kupfer-Beryllium-Legierung, ausgewählt ist.

3. Glaszusammensetzung nach einem der Ansprüche 1 oder 2, **dadurch gekennzeichnet, dass** sie TiO₂ in einem Gehalt in Molprozent umfasst, der zwischen 1 und 13 %, vorteilhafter zwischen 4 und 11 % liegt.

4. Glaszusammensetzung nach einem der Ansprüche 1 bis 3, **dadurch gekennzeichnet, dass** sie K₂O in einem Gehalt in Molprozent von höchstens 30 % umfasst, der vorteilhaft zwischen 1 und 20 %, vorteilhafter zwischen 4 und 16 % liegt.

5. Glaszusammensetzung nach einem der Ansprüche 1 bis 4, **dadurch gekennzeichnet, dass** der Wärmeausdehnungskoeffizient des Glases zwischen 11 und 22 ppm/°C, vorteilhaft zwischen 12 und 16 ppm/°C liegt.

6. Verwendung der Glaszusammensetzung nach einem der Ansprüche 1 bis 5 zur glasmetallischen Versiegelung von Kupfermetall oder einer Kupferlegierung, die eventuell vernickelt oder vernickelt-vergoldet ist, vorteilhaft eine Kupfer-Beryllium-Legierung, die eventuell vernickelt oder vernickelt-vergoldet ist, mit einer Legierung oder einem Metall mit einem Wärmeausdehnungskoeffizienten von mehr als 16 ppm/°C, insbesondere außer Kupfer oder einer Kupferlegierung.

7. Verwendung nach Anspruch 6, **dadurch gekennzeichnet, dass** die Legierung oder das Metall mit einem Wärmeausdehnungskoeffizienten von mehr als 16 ppm/°C, außer Kupfer oder einer Kupferlegierung, aus Aluminium und seinen Legierungen und rostfreiem Stahl ausgewählt ist, wobei es sich vorteilhaft um eine Aluminiumlegierung handelt, die aus einer Aluminium-Silizium-, Aluminium-Magnesium- oder Aluminium-Magnesium-Silizium-Legierung ausgewählt ist.

8. Verwendung nach einem der Ansprüche 6 oder 7, **dadurch gekennzeichnet, dass** die glasmetallische Versiegelung in einem Stecker, vorteilhaft einem Mikro-D-Stecker, zwischen einem Kontakt aus Kupfer oder aus Kupferlegierung, die eventuell vernickelt oder vernickelt-vergoldet ist, und einem Einsatz und/oder Gehäuse aus Legierung oder Metall mit einem Wärmeausdehnungskoeffizienten von mehr als 16 ppm/°C durchgeführt wird.

9. Stecker, umfassend einen Kontakt aus Kupfer oder aus Kupferlegierung, die eventuell vernickelt oder vernickelt-vergoldet ist, vorteilhaft aus Kupfer-Beryllium-Legierung, die eventuell vernickelt oder vernickelt-vergoldet ist, einen Einsatz und/oder ein Gehäuse aus Metall oder Legierung mit einem Wärmeausdehnungskoeffizienten von mehr als 16 ppm/°C und ein Material zur glasmetallischen Versiegelung zwischen dem Kontakt und dem Einsatz und/oder Gehäuse, **dadurch gekennzeichnet, dass** das Material zur Versiegelung ein Glas auf der Basis von Telluroxid mit der wie in einem der Ansprüche 1 bis 5 definierten Zusammensetzung ist.

10. Stecker nach Anspruch 9, **dadurch gekennzeichnet, dass** die Legierung oder das Metall mit einem Wärmeausdehnungskoeffizienten von mehr als 16 ppm/°C aus Aluminium und seinen Legierungen und rostfreiem Stahl ausgewählt ist, wobei es sich vorteilhaft um eine Aluminiumlegierung handelt, die aus einer Aluminium-Silizium-, Aluminium-Magnesium- oder Aluminium-Magnesium-Silizium-Legierung ausgewählt ist.

11. Stecker nach einem der Ansprüche 9 oder 10, **dadurch gekennzeichnet, dass** es sich um einen Mikro-D-Stecker handelt.

12. Stecker nach einem der Ansprüche 9 bis 11, **dadurch gekennzeichnet, dass** er mit einer Heliumleckrate von weniger als 3 x 10⁻¹⁰ mbar.l/s hermetisch dicht ist, einen Isolierungswiderstand zwischen den Kontakten und zwischen jedem Kontakt und dem Einsatz und/oder Gehäuse > 5 GOhm aufweist und eine Einsatztemperatur hat, die bis zu 200 °C reichen kann.

13. Stecker nach einem der Ansprüche 9 bis 12, **dadurch gekennzeichnet, dass** die Kupferlegierung oder das Kupfer des Kontakts nicht vernickelt ist, dass die Legierung oder das Metall mit einem Wärmeausdehnungskoeffizienten von mehr als 16 ppm/°C aus Aluminium und seinen Legierungen ausgewählt ist und dass der Stecker mit einem remanenten Magnetismus < 20 nT nichtmagnetisch ist.

14. Verfahren zur glasmetallischen Versiegelung eines Kontakts aus Kupfer oder einer Kupferlegierung, die eventuell vernickelt oder vernickelt-vergoldet ist, in einem Einsatz und/oder Gehäuse aus Metall oder Legierung mit einem Wärmeausdehnungskoeffizienten von mehr als 16 ppm/°C, insbesondere außer Kupfer oder einer Kupferlegierung, umfassend die folgenden sukzessiven Schritte
- a) Bereitstellen eines Kontakts aus Kupfer oder einer Kupferlegierung, die eventuell vernickelt oder vernickelt-vergoldet ist, und eines Einsatzes und/oder Gehäuses aus Metall oder einer Legierung mit einem Wärmeausdehnungskoeffizienten von mehr als 16 ppm/°C, insbesondere außer Kupfer oder einer Kupferlegierung,
- b) Bereitstellen eines Vorformlings aus Glas auf der Basis von Telluroxid mit der wie in einem der Ansprüche 1 bis 5 definierten Zusammensetzung,
- c) Inkontaktbringen des Vorformlings mit dem Kontakt und mit dem Einsatz und/oder dem Gehäuse,
- d) Halten des Kontakts der Kontakt-Vorformling-Einsatz- und/oder -Gehäuse-Einheit mithilfe eines geeigneten Werkzeugs,
- e) Erhitzen der Kontakt-Vorformling-Einsatz- und/oder -Gehäuse-Einheit auf eine Temperatur und für eine Zeit, die ausreichen, um die glasmetallische Versiegelung von Glas an Metall zu erzielen,
- f) Erlangen der so versiegelten Einheit.

15. Verfahren nach Anspruch 14, **dadurch gekennzeichnet, dass** die Temperatur des Schritts e) zwischen 350 und 500 °C liegt.

## Claims

1. A tellurium-oxide-based glass composition for the glass-to-metal sealing of alloys or metals having a coefficient of thermal expansion higher than 16 ppm/°C, said composition consisting of, in molar percent:
- between 60 and 80% and advantageously between 64 and 79% TeO₂;
- between 5 and 35% and advantageously between 14 and 31% ZnO;
- TiO₂;
- between 0 and 30% and advantageously between 0 and 20% K₂O;
- and unavoidable impurities,
said composition being essentially free of lead oxide, sodium oxide and vanadium oxide and the TiO₂ amount being of at most 15%.

2. The glass composition as claimed in claim 1, **characterized in that** the alloy or metal having a coefficient of thermal expansion higher than 16 ppm/°C is chosen from aluminum and its alloys, advantageously an aluminum-silicon, aluminum-magnesium or aluminum-magnesium-silicon alloy, stainless steel, copper and copper alloys optionally plated with nickel or plated with nickel and gold, and advantageously a copper-beryllium alloy optionally plated with nickel or plated with nickel and gold.

3. The glass composition as claimed in either one of claims 1 and 2, **characterized in that** it comprises TiO₂ in an amount in molar percent comprised between 1 and 13% and more advantageously comprised between 4 and 11%.

4. The glass composition as claimed in any one of claims 1 to 3, **characterized in that** it comprises K₂O in an amount in molar percent of at most 30%, advantageously comprised between 1 and 20%, and more advantageously comprised between 4 and 16%.

5. The glass composition as claimed in any one of claims 1 to 4, **characterized in that** the coefficient of thermal expansion of the glass is comprised between 11 and 22 ppm/°C and advantageously between 12 and 16 ppm/°C.

6. The use of the glass composition as claimed in any one of claims 1 to 5 for the glass-to-metal sealing of copper or a copper alloy, optionally plated with nickel or plated with nickel and gold, advantageously a copper-beryllium alloy, optionally plated with nickel or plated with nickel and gold, with an alloy or a metal having a coefficient of thermal expansion higher than 16 ppm/°C, in particular other than copper or than a copper alloy.

7. The use as claimed in claim 6, **characterized in that** the alloy or metal having a coefficient of thermal expansion higher than 16 ppm/°C other than copper or than a copper alloy is chosen from aluminum and its alloys and stainless steel, and advantageously it is an aluminum alloy chosen from an aluminum-silicon, aluminum-magnesium or aluminum-magnesium-silicon alloy.

8. The use as claimed in either one of claims 6 and 7, **characterized in that** the glass-to-metal seal is formed in a connector, advantageously a micro-D connector, between a contact made of copper or of copper alloy, optionally plated with nickel or plated with nickel and gold, and an insert and/or shell made of an alloy or metal having a coefficient of thermal expansion higher than 16 ppm/°C.

9. A connector comprising a contact made of copper or of copper alloy, optionally plated with nickel or plated with nickel and gold, advantageously made of a copper-beryllium alloy, optionally plated with nickel or plated with nickel and gold, an insert and/or shell made of a metal or alloy having a coefficient of thermal expansion higher than 16 ppm/°C and a glass-to-metal sealant between the contact and the insert and/or shell, **characterized in that** the sealant is a tellurium-oxide-based glass having the composition such as defined in any one of claims 1 to 5.

10. The connector as claimed in claim 9, **characterized in that** the alloy or metal having a coefficient of thermal expansion higher than 16 ppm/°C is chosen from aluminum and its alloys and stainless steel, and advantageously is an aluminum alloy chosen from an aluminum-silicon, aluminum-magnesium or aluminum-magnesium-silicon alloy.

11. The connector as claimed in either one of claims 9 and 10, **characterized in that** it is a micro-D connector.

12. The connector as claimed in any one of claims 9 to 11, **characterized in that** it is hermetic with a helium leak rate lower than 3×10⁻¹⁰ mbar.l/s, has an insulation resistance between the contacts and between each contact and the insert and/or shell > 5 Gohm and an operating temperature of up to 200°C.

13. The connector as claimed in any one of claims 9 to 12, **characterized in that** the copper alloy or copper of the contact is not plated with nickel, **in that** the alloy or metal having a coefficient of thermal expansion higher than 16 ppm/°C is chosen from aluminum and its alloys and **in that** the connector is nonmagnetic with a residual magnetism < 20 nT.

14. A process for forming a glass-to-metal seal between a contact made of copper or of copper alloy, optionally plated with nickel or plated with nickel and gold, and an insert and/or shell made of a metal or alloy having a coefficient of thermal expansion higher than 16 ppm/°C, in particular other than copper or than a copper alloy, comprising the following successive steps:
- a) providing a contact made of copper or of copper alloy, optionally plated with nickel or plated with nickel and gold, and an insert and/or shell made of a metal or alloy having a coefficient of thermal expansion higher than 16 ppm/°C, in particular other than copper or than a copper alloy;
- b) providing a preform of tellurium-oxide-based glass having the composition such as defined in any one of claims 1 to 5;
- c) bringing the preform into contact with the contact and with the insert and/or the shell;
- d) maintaining the contact between the assembly made up of the contact, preform and insert and/or shell using a suitable tool;
- e) heating the assembly made up of the contact, preform and insert and/or shell to a temperature and for a time sufficient to obtain the glass-to-metal seal;
- f) collecting the assembly thus sealed.

15. The process as claimed in claim 14, **characterized in that** the temperature of step e) is comprised between 350 and 500°C.
